# EUROPÄISCHE PATENTSCHRIFT

(11) **EP 3 921 919 B1**
(45) Veröffentlichungstag und Bekanntmachung des Hinweises auf die Patenterteilung: **28.12.2022**
(21) Anmeldenummer: 20721461.0
(22) Anmeldetag: 16.04.2020
(51) Int. Cl.: H02K 1/04, H02K 15/02

(54) **MAGNETBLECHSTAPEL, VERFAHREN ZUR FERTIGUNG EINES MAGNETBLECHSTAPELS UND ELEKTRISCHE MASCHINE**
MAGNETIC SHEET STACK, METHOD FOR PRODUCING SAME AND ELECTRICAL MACHINE
EMPILEMENT DE TÔLES MAGNÉTIQUES, PROCÉDÉ DE FABRICATION D'UN EMPILEMENT DE TÔLES MAGNÉTIQUES ET MACHINE ÉLECTRIQUE

(30) Priorität: 06.05.2019 EP 19172809
(43) Veröffentlichungstag der Anmeldung: 15.12.2021
(73) Patentinhaber: Siemens Aktiengesellschaft, 80333 München (DE)
(72) Erfinder: BUSCHBECK, Jörg, 90482 Nürnberg (DE); RIEGER, Gotthard, 80636 München (DE); SCHUH, Carsten, 85598 Baldham (DE); SOLLER, Thomas, 94469 Deggendorf (DE); VOLLMER, Rolf, 36129 Gersfeld (DE)
(86) Internationale Anmeldenummer: PCT/EP2020/060661
(87) Internationale Veröffentlichungsnummer: WO 2020/224927

(56) Entgegenhaltungen:
- EP-A1- 3 255 758
- WO-A1-2011/101985
- WO-A1-2019/008722
- US-A1- 2018 358 868

## Beschreibung

Die Erfindung betrifft einen Magnetblechstapel, ein Verfahren zur Fertigung eines Magnetblechstapels und eine elektrische Maschine.

Es ist bekannt, elektrischen Maschinen mit Rotoren und Statoren auszubilden, welche Magnetblechstapel umfassen.

Regelmäßig werden solche Magnetblechstapel hergestellt, indem dünne, elektrisch isolierende (Polymer-)Lagen zwischen den einzelnen Magnetblechen des Magnetblechstapels eingebracht werden. Mit solchen isolierenden Lagen soll die Entstehung von Wirbelströmen unterdrückt werden und ein ausreichend mechanisch stabiler Aufbau gewährleistet werden. Die folgenden Dokumenten offenbaren bereits verschiedene Verfahren zur Fertigung eines Magnetblechstapels mittels Abstandhalter: US 2018/358868 A1, WO 2011/101985 A1, EP 3 255 758 A1 und WO 2019/008722 A1.

Jedoch begrenzt bei solchen Magnetblechstapeln eine thermische Belastung der Magnetbleche des Magnetblechstapels deren praktischen Einsatz.

Es ist daher Aufgabe der Erfindung, einen gegenüber dem Stand der Technik verbesserten Magnetblechstapel anzugeben, welcher insbesondere eine höhere Temperaturbelastbarkeit aufweist. Ferner ist es Aufgabe der Erfindung, ein verbessertes Verfahren zur Fertigung eines Magnetblechstapels sowie eine verbesserte elektrische Maschine anzugeben.

Diese Aufgabe der Erfindung wird mit einem Magnetblechstapel mit den in Anspruch 1 angegebenen Merkmalen sowie mit einem Verfahren mit den in Anspruch 8 angegebenen Merkmalen sowie mit einer elektrischen Maschine mit den in Anspruch 10 angegebenen Merkmalen gelöst.

Bevorzugte Weiterbildungen der Erfindung sind in den zugehörigen Unteransprüchen, der nachfolgenden Beschreibung und der Zeichnung angegeben.

Der erfindungsgemäße Magnetblechstapel ist mit einer Mehrzahl von Magnetblechen gebildet, welche voneinander elektrisch isoliert sind, indem sie voneinander überwiegend mit nichtverschwindendem lichten Maß beabstandet sind.

Unter einer überwiegend mit nichtverschwindendem lichten Maß bestehenden Beabstandung der Magnetbleche ist zu verstehen, dass die Magnetbleche des Magnetblechstapels mit ihren, benachbarten Magnetblechen zugewandten, Flachseiten mit einem überwiegenden Flächenanteil nicht an zwischen den Magnetblechen befindlichen Bauteilen anliegen, sondern der überwiegende Flächenanteil der Flachseiten mit benachbarten Magnetblechen ein lichtes Maß größer als Null einschließt. Zweckmäßig ist der überwiegende Flächenanteil ein den halben Flächenanteil übersteigender Flächenanteil, vorzugsweise ein zumindest 90-prozentiger Flächenanteil, besonders bevorzugt ein mindestens 98-prozentiger Flächenanteil.

Bei dem erfindungsgemäßen Magnetblechstapel sind die Magnetbleche infolge ihrer Beabstandung mit überwiegend lichtem Maß voneinander elektrisch isoliert, ohne dass eigens Isolierstoffe im festen Aggregatzustand zwischen den Magnetblechen des Magnetblechstapels vorgesehen sein müssen. Bei dem erfindungsgemäßen Magnetblechstapel ist folglich aufgrund des möglichen Verzichts von Isolationsmaterialien eine besonders hohe Temperaturstabilität ermöglicht. Zweckmäßig befindet sich über den überwiegenden Teil der flächigen Erstreckung der Magnetbleche zwischen diesen lediglich eine Gasschicht, insbesondere eine Luftschicht. Vorteilhaft sind bei dem erfindungsgemäßen Magnetblechstapel die Magnetbleche infolge ihrer Beabstandung über den überwiegenden Teil ihrer flächigen Erstreckungen lediglich durch je eine zwischenliegende Luftschicht insbesondere homogener Dicke voneinander elektrisch isoliert. Daher sind bei dem Magnetblechstapel gemäß der Erfindung weitere Isolationsmaterialien, etwa organische Isolierlagen wie insbesondere Lacke, verzichtbar. Somit ist erfindungsgemäß eine besonders hohe Temperaturbelastbarkeit des Magnetblechstapels erzielbar. Durch den definiert einstellbaren Abstand der Magnetbleche des Magnetblechstapels sind zudem weitere Freiheitsgrade im Design des Magnetblechstapels eröffnet.

Bei dem erfindungsgemäßen Magnetblechstapel sind die Magnetbleche mittels mehrerer zwischenliegender Abstandshalter voneinander beabstandet.

Mittels der in der Erfindung vorgesehenen Abstandshalter zwischen zwei Magnetblechen ist zum einen ein definierter Spalt, insbesondere Luftspalt, zwischen den Magnetblechen realisierbar. Folglich sind die Magnetbleche durch die Spalte mit einem Kühlfluid, vorzugsweise mittels Kühlluft kühlbar. Zugleich weist der erfindungsgemäße Magnetblechstapel aufgrund der vorgesehenen Abstandshalter eine besonders hohe mechanische Stabilität auf.

Bei dem erfindungsgemäßen Magnetblechstapel sind die Abstandshalter mit oder aus Keramik gebildet. Mit Keramik gebildete Abstandshalter lassen sich vorteilhaft hochgradig elektrisch isolierend und gleichzeitig mechanisch hochfest ausbilden, sodass eine besonders hohe elektrische Temperaturbelastbarkeit ermöglicht ist.

In einer bevorzugten Weiterbildung des erfindungsgemäßen Magnetblechstapels ist oder sind der oder die Abstandshalter mit Aluminiumoxid und/oder Zirkonoxid und/oder Magnesiumoxid und/oder Yttriumoxid und/oder Bornitrid und/oder Yttrium-Aluminium-Granat und/oder Siliziumnitrid und/oder Siliziumdioxid gebildet. Gerade die vorgenannten Materalien ermöglichen Abstandshalter mit besonders stark elektrisch isolierenden und gleichzeitig mechanisch hochfesten Eigenschaften, sodass ein Magnetblechstapel mit einer hohen Temperaturbelastbarkeit realisierbar ist.

Bei dem erfindungsgemäßen Magnetblechstapel sind die Abstandshalter mit Partikeln elektrisch isolierenden Materials gebildet. Mit Partikeln elektrisch isolierenden Materials, insbesondere mit Partikeln im Mikrometerbereich, ist es leicht möglich, einen definierten Luftspalt mit einer Breite von einem Bruchteil eines Mikrometers oder von wenigen Mikrometern zur Vermeidung der Ausbildung von Wirbelströmen zu realisieren. Gleichzeitig ist die Anordnung solcher Abstandshalter besonders leicht möglich, da lediglich eine hinreichend hohe Dichte zur zuverlässigen Beabstandung der Magnetbleche erreicht werden muss. Eine genaue Positionierung der Abstandshalter an den Magnetblechen in der Art einer kontrollierten Mikromanipulation hingegen ist nicht eigens erforderlich. Somit bilden Keramikpartikel besonders einfach einsetzbare Abstandshalter im erfindungsgemäß relevanten Abstandsbereich von einigen Mikrometern. Vorteilhaft kann in dieser Weiterbildung des erfindungsgemäßen Magnetblechstapels zudem die Konzentration von Partikeln frei eingestellt werden, sodass die Beabstandung der Magnetbleche des Magnetblechstapels frei eingestellt und maßgeschneidert werden kann.

Bei dem Magnetblechstapel sind gemäß der Erfindung die Partikel mit Keramikpartikeln gebildet. Vorteilhaft bilden gerade wenige Mikrometer große Keramikpartikel besonders harte und hochfeste Abstandshalter aus, welche eine hohe Temperaturbelastung erlauben.

Bevorzugt sind bei dem erfindungsgemäßen Magnetblechstapel der oder die Partikel im Wesentlichen sphärisch ausgebildet. Vorteilhaft lässt sich mit sphärischen Partikeln eine kontrollierte Beabstandung von Magnetblechen leicht erreichen, da mit sphärischen Partikeln eine kontrollierte Ausrichtung dieser Partikel an Magnetblechen aufgrund der Isotropie der sphärischen Gestalt nicht erforderlich ist. Besonders bevorzugt weisen die Partikel eine im Wesentlichen sphärische Gestalt auf. Unter einer im Wesentlichen sphärischen Gestalt ist eine Gestalt zu verstehen, deren Radius innerhalb von höchstens 20 Prozent in verschiedenen Raumrichtungen variiert. Besonders bevorzugt variiert der Radius innerhalb von höchstens 10 Prozent und idealerweise innerhalb von höchstens 5 Prozent. Besonders bevorzugt weisen die Partikel eine nicht splittrige und/oder eine nicht spratzige und/oder eine nicht faserartige und/oder eine nicht plättchenartige Gestalt auf.

Insbesondere weisen die Partikel einen Durchmesser von höchstens 300 Mikrometern und vorzugsweise von höchstens 100 Mikrometern auf. Idealerweise weisen die Partikel einen Durchmesser von höchstens 50 Mikrometern auf.

Idealerweise weisen die Durchmesser der Partikel eine Größenverteilung auf, welche monomodal oder, zumindest näherungsweise, gaussverteilt ist und/oder einen Mittelwert von mindestens 0,5 Mikrometern und/oder höchstens 20 Mikrometern, vorzugsweise von mindestens einem Mikrometer und/oder höchstens 6 Mikrometern, besonders bevorzugt von mindestens 2 Mikrometern und/oder höchstens 4 Mikrometern aufweist.

Bevorzugt ist unter einem Durchmesser eines Partikels im Sinne der vorliegenden Erfindung ein größter Durchmesser des Partikels zu verstehen, also die größte Abmessung des Partikels in einer Raumrichtung. Alternativ und ebenfalls bevorzugt kann unter einem Durchmesser eines Partikels im Sinne dieser Erfindung ein effektiver, d. h. ein, insbesondere über sämtliche Raumrichtungen, gemittelter Durchmesser des Partikels verstanden werden.

Alternativ und ebenfalls bevorzugt ist unter einem Durchmesser eines Partikels im Sinne dieser Erfindung ein kleinster Durchmesser des Partikels, d.h. eine kleinste Abmessung des Partikels entlang einer Raumrichtung, zu verstehen.

Vorzugsweise sind die Durchmesser der Partikel mit einer Verteilungsfunktion verteilt, welche eine Standardabweichung von höchstens 5 Mikrometern, zweckmäßig höchstens 3 Mikrometern und idealerweise höchstens einem Mikrometer, aufweist.

Bei dem erfindungsgemäßen Verfahren zur Fertigung eines Magnetblechstapels werden Magnetbleche sowie eine Suspension mit Partikeln isolierenden Materials herangezogen. Erfindungsgemäß wird bei dem Verfahren die Suspension an eines oder mehrere Magnetbleche deponiert, wonach die Magnetbleche gestapelt werden. Bei dem erfindungsgemäßen Verfahren ist es folglich nicht erforderlich, eigens Abstandshalter individuell zu mikropositionieren. Vielmehr ist es ausreichend, die Abstandshalter in Form von Partikeln, die mit elektrisch isolierendem Material gebildet sind, in einer Suspension zu halten und als Suspension auf die Magnetbleche aufzubringen.

Die Suspension kann optional Binder enthalten, welche die Partikel nach Deposition an den Magnetblechen gewissermaßen festkleben. Zweckmäßig sind die Partikel sphärische Partikel und vorzugsweise Keramikpartikel wie oben beschrieben. Mittels Keramikpartikeln ist zudem eine mechanische Stabilität des Magnetblechstapels sehr einfach sichergestellt.

In einer vorteilhaften Weiterbildung des erfindungsgemäßen Verfahrens wird deponiert, indem die Suspension gesprüht und/oder gedruckt wird und/oder das oder die Magnetbleche in die Suspension getaucht werden.

Zweckmäßig werden bei dem erfindungsgemäßen Verfahren die Magnetbleche, während oder nachdem sie gestapelt werden, miteinander verpresst oder paketiert. Mittels der Verpressung oder Paketierung der Magnetbleche sind die Partikel derart zwischen den Magnetblechen kraftschlüssig und gegebenenfalls auch formschlüssig gehalten, dass eine mechanisch äußerst stabile Arretierung der Partikel zwischen den Magnetblechen gegeben ist.

Die erfindungsgemäße elektrische Maschine ist insbesondere ein Elektromotor und/oder ein elektrischer Generator und weist einen erfindungsgemäßen Magnetblechstapel wie vorhergehend beschrieben, insbesondere hergestellt nach einem erfindungsgemäßen Verfahren wie vorhergehend beschrieben, auf. Vorzugsweise weist die elektrische Maschine einen Stator und/oder einen Rotor mit jeweils einem erfindungsgemäßen Magnetblechstapel auf.

Nachfolgend wird die Erfindung anhand eines in der Zeichnung angegeben Ausführungsbeispiels näher erläutert.

Es zeigen:

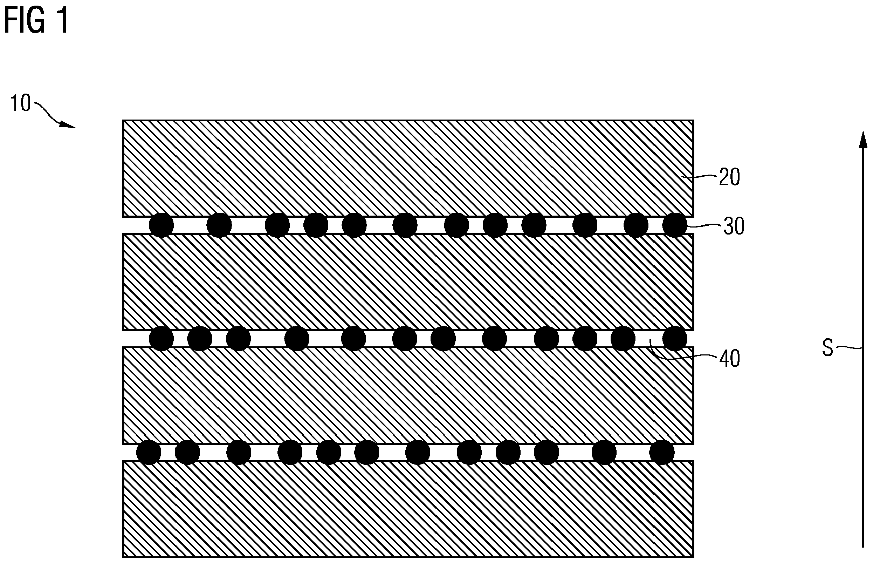

- Figur 1: einen erfindungsgemäßen Magnetblechstapel schematisch im Querschnitt sowie
- Figur 2: eine erfindungsgemäße elektrische Maschine schematisch in einer Prinzipskizze.

Der erfindungsgemäße Magnetblechstapel 10 umfasst in an sich bekannter Weise eine Mehrzahl von Magnetblechen 20, welche im Wesentlichen als ebene Flachteile mit zueinander parallelen Flachseiten ausgebildet sind. Die Magnetbleche 20 sind voneinander mittels Keramikpartikeln 30 beabstandet, welche zwischen den Magnetblechen 20 befindlich und mit diesen in Anlage sind. Die Keramikpartikel 30 weisen jeweils eine nahezu perfekt sphärische Gestalt sowie einen Durchmesser von 40 Mikrometern auf. Dabei weisen die Keramikpartikel 30 untereinander eine sehr homogene Größenverteilung auf, d.h. die Durchmesser der Keramikpartikel sind näherungsweise gaussverteilt mit einem Mittelwert bei 3 Mikrometern und einer Standardabweichung von 1,5 Mikrometern. In weiteren, nicht eigens dargestellten Ausführungsbeispielen sind zusätzlich Keramikpartikel, welche einen Durchmesser von mehr als 5 Mikrometern und weniger als einem Mikrometer haben, ausgefiltert. Damit fungieren die Keramikpartikel 30 gewissermaßen als Abstandshalter zwischen zwei benachbarten Magnetblechen 20 und halten die Magnetbleche auf einem mittleren Abstand von etwa 2,5 Mikrometern voneinander fern, da sich bei der Stapelverpressung die Keramikpartikel leicht in die Metalloberflächen eindrücken. In weiteren, nicht eigens dargestellten Ausführungsbeispielen, welche im Übrigen dem Dargestellten entsprechen, können die Keramikpartikel auch eine monomodale Größenverteilung aufweisen.

Die Keramikpartikel 30 sind im dargestellten Ausführungsbeispiel aus Aluminiumoxid gebildet. In weiteren, nicht eigens dargestellten Ausführungsbeispielen sind die Keramikpartikel 30 alternativ oder zusätzlich mit oder aus Zirkonoxid und/oder Magnesiumoxid und/oder Yttriumoxid und/oder Bornitrid und/oder Yttrium-Aluminium-Granat und/oder Siliziumnitrid und/oder Siliziumdioxid gebildet.

Zunächst werden die Magnetbleche 20 gestanzt oder auf sonstige Weise gefertigt, beispielsweise mittels Siebdrucks und/oder Schablonendrucks und anschließenden Sinterns.

Nachfolgend können die Keramikpartikel 30 erfindungsgemäß wie folgt zwischen die Magnetbleche 20 eingebracht werden:
Dazu wird eine Suspension mit den Keramikpartikeln 30 herangezogen. Beispielsweise wird eine wässrige Suspension mit den Keramikpartikeln 30 herangezogen. Alternativ kann das Einbringen der Keramikpartikel 30 mittels einer Suspension der Keramikpartikel 30 in einem organischen Lösungsmittel erfolgen. Der Suspension sind optional Binder und Dispergatoren zugesetzt.

Die Suspension mit den Keramikpartikeln 30 wird mittels Sprühens oder Tauchens oder Druckens auf die Magnetbleche 20 aufgebracht, wonach sich als nachfolgender Verfahrensschritt ein Trocknen der Suspension und ein Aushärten anschließt. Je nach optional für die Suspension gewähltem Binder kann der Schritt des Aushärtens auch entfallen.

Nachfolgend werden die Magnetbleche 20 aufeinander gestapelt und miteinander in Richtung senkrecht zu den Flachseiten der Magnetbleche 20, d.h. in Stapelrichtung S, verpresst. Dabei werden die einzelnen Keramikpartikel 30 mechanisch in die Flachseiten der Magnetbleche 20 eingepresst. Im Falle der optional verwendeten Binder bleiben die Keramikpartikel 30 zusätzlich über den als Kleber fungierenden Binder an den Flachseiten der Magnetbleche 20 fixiert. Auf diese Weise bleiben die Keramikpartikel 30 form- und kraftschlüssig zwischen den Magnetblechen 20 auch bei hohen Betriebsbelastungen fixiert.

Alternativ können die Magnetbleche 20 in weiteren, nicht eigens dargestellten Ausführungsbeispielen auch auf andere Weise verpresst sein.

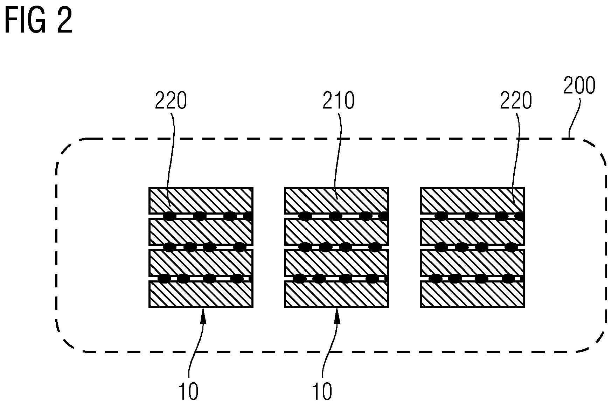

Die in Fig. 2 dargestellte erfindungsgemäße elektrische Maschine 200 umfasst einen Stator 210 und einen Rotor 220. Sowohl der Stator 210 als auch der Rotor 220 der elektrischen Maschine sind jeweils mit einem erfindungsgemäß hergestellten erfindungsgemäßen Magnetblechstaple 10 wie oben beschrieben gebildet.

## Patentansprüche

1. Magnetblechstapel für eine elektrische Maschine mit einer Mehrzahl von Magnetblechen (20), welche voneinander elektrisch isoliert sind, indem sie voneinander überwiegend mit nichtverschwindendem lichten Maß beabstandet sind, bei welchem die Magnetbleche (20) mittels mehrerer zwischenliegender Abstandshalter (30) voneinander beabstandet sind, wobei die Abstandshalter (30) mit Keramikpartikeln gebildet sind, so dass die Magnetbleche (20) des Magnetblechstapels über den überwiegenden Teil ihrer flächigen Erstreckungen durch je eine zwischenliegende Gasschicht voneinander elektrisch isoliert sind,
**dadurch gekennzeichnet, dass**
zwischen jeweils zwei Magnetblechen des Magnetblechstapels ein definierter Spalt mittels der Abstandhalter realisiert ist, wodurch der Magnetblechstapel mit einem Kühlfluid kühlbar ist.

2. Magnetblechstapel nach Anspruch 1, wobei der Spalt ein Luftspalt ist, wodurch der Magnetblechstapel vorzugsweise mittels Kühlluft kühlbar ist.

3. Magnetblechstapel nach Anspruch 1 oder 2, bei welchem die Keramikpartikel zwischen den Magnetblechen (20) durch Verpressung oder Paketierung der Magnetbleche kraftschlüssig gehalten werden.

4. Magnetblechstapel nach einem der vorhergehenden Ansprüche, bei welchem die Abstandshalter (30) mit Aluminiumoxid und/oder Zirkonoxid und/oder Magnesiumoxid und/oder Yttriumoxid und/oder Bornitrid und/oder Yttrium-Aluminium-Granat und/oder Siliziumnitrid und/oder Siliziumdioxid gebildet ist oder sind.

5. Magnetblechstapel nach einem der vorhergehenden Ansprüche, bei welchem die Partikel einen Durchmesser von höchstens 300 Mikrometern, insbesondere von höchstens 100 Mikrometern und vorzugsweise einen Durchmesser von höchstens 50 Mikrometern, aufweisen.

6. Magnetblechstapel nach Anspruch 5, bei welchem die Durchmesser der Partikel eine Größenverteilung aufweisen, welche monomodal oder, zumindest näherungsweise, gaussverteilt ist mit einem Mittelwert von mindestens 0,5 Mikrometern und/oder höchstens 20 Mikrometern, vorzugsweise mit einem Mittelwert von mindestens einem Mikrometer und höchstens 6 Mikrometern, besonders bevorzugt mit einem Mittelwert von mindestens 2 Mikrometern und höchstens 4 Mikrometern.

7. Magnetblechstapel nach einem der vorhergehenden Ansprüche, bei welchem die Partikel im Wesentlichen sphärisch ausgebildet sind.

8. Verfahren zur Fertigung eines Magnetblechstapels nach einem der vorhergehenden Ansprüche, bei welchem Magnetbleche (20) herangezogen werden, eine Suspension mit den Keramikpartikeln herangezogen wird und die Suspension an eines oder mehrere Magnetbleche (20) deponiert wird, wonach die Magnetbleche (20) gestapelt und während oder nachdem sie gestapelt werden, miteinander verpresst oder paketiert werden.

9. Verfahren nach dem vorhergehenden Anspruch, bei welchem deponiert wird, indem die Suspension gesprüht und/oder gedruckt wird und/oder das oder die Magnetbleche (20) in die Suspension getaucht werden.

10. Elektrische Maschine mit einem Magnetblechstapel (10) nach einem der Ansprüche 1 bis 7 und/oder hergestellt nach einem Verfahren nach einem der Ansprüche 8 bis 9.

## Claims

1. Magnetic sheet stack for an electric machine with a plurality of magnetic sheets (20) which are electrically insulated from one another by being spaced apart from one another predominantly with a non-vanishing clearance, in which the magnetic sheets (20) are spaced apart from one another by means of several intermediately disposed spacers (30), wherein the spacers (30) are formed with ceramic particles, such that the magnetic sheets (20) of the magnetic sheet stack are electrically insulated from one another over the predominant part of their planar extents in each case by an intermediately disposed gas layer, **characterised in that** a defined gap is implemented between two magnetic sheets of the magnetic sheet stack in each case by means of the spacers, as a result of which the magnetic sheet stack can be cooled with a cooling fluid.

2. Magnetic sheet stack according to claim 1, wherein the gap is an air gap, as a result of which the magnetic sheet stack can preferably be cooled by means of cooling air.

3. Magnetic sheet stack according to claim 1 or 2, in which the ceramic particles are held in a force-fit manner between the magnetic sheets (20) by means of pressing or packaging of the magnetic sheets.

4. Magnetic sheet stack according to one of the preceding claims, in which the spacer or spacers (30) is or are formed with aluminium oxide and/or zirconium oxide and/or magnesium oxide and/or yttrium oxide and/or boron nitride and/or yttrium aluminium garnet and/or silicon nitride and/or silicon dioxide.

5. Magnetic sheet stack according to one of the preceding claims, in which the particles have a diameter of no more than 300 micrometres, in particular of no more than 100 micrometres and preferably of no more than 50 micrometres.

6. Magnetic sheet stack according to claim 5, in which the diameters of the particles have a size distribution which is a monomodal or at least approximately Gaussian distribution with a mean value of at least 0.5 micrometres and/or no more than 20 micrometres, preferably with a mean value of at least one micrometre and no more than 6 micrometres, particularly preferably with a mean value of at least 2 micrometres and no more than 4 micrometres.

7. Magnetic sheet stack according to one of the preceding claims, in which the particles are embodied to be essentially spherical.

8. Method for manufacturing a magnetic sheet stack according to one of the preceding claims, in which magnetic sheets (20) are used, a suspension having the ceramic particles is used, and the suspension is deposited onto one or several magnetic sheets (20), after which the magnetic sheets (20) are stacked and, during or after stacking, are pressed or packaged together.

9. Method according to the preceding claim, in which the depositing is carried out by spraying and/or printing the suspension and/or by dipping the magnetic sheet or sheets (20) into the suspension.

10. Electric machine with a magnetic sheet stack (10) according to one of claims 1 to 7 and/or manufactured according to a method according to one of claims 8 to 9.

## Revendications

1. Empilement de tôles magnétiques d'une machine électrique comprenant une pluralité de tôles (20) magnétiques, qui sont isolées électriquement les unes des autres par le fait qu'elles sont à distance les unes des autres principalement dans une mesure de dégagement ne disparaissant pas, dans lequel les tôles (20) magnétiques sont à distance les unes des autres au moyen de plusieurs entretoises (30) intermédiaires, dans lequel les entretoises (30) sont constituées de particules de céramique, de sorte que les tôles (20) magnétiques de l'empilement de tôles magnétiques sont sur la partie prépondérante de leurs étendues en surface, isolées électriquement les unes des autres par respectivement une couche de gaz intermédiaire, **caractérisé en ce que**, entre respectivement deux tôles magnétiques de l'empilement de tôles magnétiques, un intervalle défini est réalisé au moyen de l'entretoise, grâce à quoi l'empilement de tôles magnétiques peut être refroidi par un fluide de refroidissement.

2. Empilement de tôles magnétiques suivant la revendication 1, dans lequel l'intervalle est un entrefer, grâce à quoi l'empilement de tôles magnétiques peut être refroidi, de préférence, au moyen d'air de refroidissement.

3. Empilement de tôles magnétiques suivant la revendication 1 ou 2, dans lequel les particules de céramique entre les tôles (20) magnétiques sont maintenues à coopération de force par compression ou par mise en paquet des tôles magnétiques.

4. Empilement de tôles magnétiques suivant l'une des revendications précédentes, dans lequel les entretoises (30) sont en oxyde d'aluminium et/ou en oxyde de zirconium et/ou en oxyde de magnésium et/ou en oxyde d'yttrium et/ou en nitrure de bore et/ou en grenat d'yttrium et d'aluminium et/ou en nitrure de silicium et/ou en dioxyde de silicium ou en sont formées.

5. Empilement de tôles magnétiques suivant l'une des revendications précédentes, dans lequel les particules ont un diamètre de 300 microns au plus, notamment de 100 microns au plus et, de préférence, un diamètre de 50 microns au plus.

6. Empilement de tôles magnétiques suivant la revendication 5, dans lequel les diamètres des particules ont une répartition des dimensions, qui est monomodale ou au moins approximativement gaussienne, en ayant une valeur moyenne d'au moins 0,5 micron et/ou d'au plus 20 microns, en ayant, de préférence, une valeur moyenne d'au moins un micron et d'au plus 6 microns, d'une manière particulièrement préférée, en ayant une valeur moyenne d'au moins 2 microns et d'au plus 4 microns.

7. Empilement de tôles magnétiques suivant l'une des revendications précédentes, dans lequel les particules sont sensiblement sphériques.

8. Procédé de fabrication d'un empilement de tôles magnétiques suivant l'une des revendications précédentes, dans lequel on se procure des tôles (20) magnétiques, on se procure une suspension ayant les particules de céramique et on dépose la suspension sur une ou plusieurs tôles (20) magnétiques, on empile ensuite les tôles (20) magnétiques et pendant ou après qu'elles sont empilées, on les comprime ou on les met en paquet les unes avec les autres.

9. Procédé suivant la revendication précédente, dans lequel on dépose, en pulvérisant et/ou en imprimant, la suspension et/ou en immergeant la ou les tôles (20) magnétiques dans la suspension.

10. Machine électrique comprenant un empilement (10) de tôles magnétiques suivant l'une des revendications 1 à 7 et/ou fabriqué par un procédé suivant l'une des revendications 8 à 9.
